# EUROPEAN PATENT APPLICATION

(11) **EP 4 543 075 A1**
(43) Date of publication of application: **23.04.2025**
(21) Application number: 23834732.2
(22) Date of filing: 29.06.2023
(51) Int. Cl.: H04W 24/08, H04W 24/10, H04L 43/50, H04L 43/062

(54) **SERVICE RULE DETECTION METHOD AND DEVICE, ELECTRONIC DEVICE, AND STORAGE MEDIUM**

(30) Priority: 07.07.2022 CN 202210795598
(71) Applicant: ZTE CORPORATION, Shenzhen, Guangdong 518057 (CN)
(72) Inventor: ZHANG, Xueliang, Shenzhen, Guangdong 518057 (CN); SUN, Xiaoyong, Shenzhen, Guangdong 518057 (CN); XIA, Chunjin, Shenzhen, Guangdong 518057 (CN); JU, Yanchao, Shenzhen, Guangdong 518057 (CN); ZHU, Lei, Shenzhen, Guangdong 518057 (CN)
(74) Representative: Canzler & Bergmeier Patentanwälte Partnerschaft mbB
(86) International application number: PCT/CN2023/104176
(87) International publication number: WO 2024/007965

(57) **Abstract**

Provided are a service rule detection method and apparatus, an electronic device, and a storage medium. The method comprises: a UPF network element receiving a use case termination request message packet sent by a test terminal via an N3 interface; adding a Rating Group parameter and a Service Identifier parameter in a Usage Report parameter set within a response message packet for the use case end request message packet; and sending the Usage Report parameter set comprising the added Rating Group parameter and Service Identifier parameter to the test terminal, enabling the test terminal to decode service identification information from the Usage Report parameter set, compare the service identification information with a predicted result, and determine a service rule detection result according to the comparison result.

## Description

### CROSS REFERENCE TO RELATED APPLICATIONS

The present disclosure claims the priority to Chinese Patent Application No. CN202210795598.2 entitled "SERVICE RULE DETECTION METHOD AND DEVICE, ELECTRONIC DEVICE, AND STORAGE MEDIUM" and filed on July 7, 2022, the contents of which are incorporated herein by reference in their entirety.

### TECHNICAL FIELD

The present disclosure relates to the technical field of communications, and in particular, to a service rule detection method and device, an electronic device, and a storage medium.

### BACKGROUND

5G mobile network operators provide a wind range of complex packages. Different charging rules are set for the different packages, and once a charging error occurs in a 5G communication network of the operators, problems such as disputes over telephone bills can be easily caused. Different traffic control strategies are adopted for the different packages, and serious accidents can be easily caused if the traffic strategies are wrong. The package system is established on the basis of correct service identification, and quick and accurate service identification detection is an important guarantee of quick launch of new service packages by the operators, and is also one of important technologies for the operators to realize autonomous networks. However, the service identification detection has the technical problems of long time consumption, large delay, high network dependency, and high risk of data leakage in some cases.

### SUMMARY

In order to solve the above technical problems, embodiments of the present disclosure provide a service rule detection method and device, an electronic device, and a storage medium.

In a first aspect, an embodiment of the present disclosure provides a service rule detection method applied to a User Plane Function (UPF) network element, including: receiving, via an N3 interface, a use case end request message packet sent by a test terminal; adding a Rating Group parameter and a Service Identifier parameter to a Usage Report parameter group in a response message for the use case end request message packet; and sending the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result; wherein the service identification information includes the Rating Group parameter, the Service Identifier parameter, a number of uplink packets, a number of downlink packets, a total number of packets, uplink traffic, downlink traffic, total traffic, and service duration.

In a second aspect, an embodiment of the present disclosure provides another service rule detection method applied to a test terminal, including: sending, according to a detection task, a use case end request message packet to a UPF network element in an execution and control process of a service detection use case; receiving a response message, which carries a Usage Report parameter group with the addition of a Rating Group parameter and a Service Identifier parameter, returned by the UPF network element via an N3 interface; decoding service identification information from the Usage Report parameter group; the service identification information including the Rating Group parameter, the Service Identifier parameter, a number of uplink packets, a number of downlink packets, a total number of packets, uplink traffic, downlink traffic, total traffic and/or service duration; and comparing the service identification information with an expected result, and determining a service rule detection result according to a comparison result; wherein, in the execution and control process of the service detection use case, traffic interception is configured to perform control to allow traffic for service rule detection to pass and stop other traffic except the traffic for service rule detection.

In a third aspect, an embodiment of the present disclosure further provides a service rule detection device applied to an UPF network element, including: a protocol analysis module, which is configured to receive, via an N3 interface, a use case end request message packet sent by a test terminal; a process control module, which is configured to add a Rating Group parameter and a Service Identifier parameter to a Usage Report parameter group in a response message for the use case end request message packet; and a signaling forwarding module, which is configured to send the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result; wherein the service identification information includes the Rating Group parameter, the Service Identifier parameter, a number of uplink packets, a number of downlink packets, a total number of packets, uplink traffic, downlink traffic, total traffic, and service duration.

In a four aspect, an embodiment of the present disclosure further provides another service rule detection device applied to a test terminal, including: a task management module, which is configured to send, according to a detection task, a use case end request message packet to a UPF network element in an execution and control process of a service detection use case; a use case control module, which is configured to receive a response message, which carries a Usage Report parameter group with the addition of a Rating Group parameter and a Service Identifier parameter, returned by the UPF network element via an N3 interface; a protocol processing module, which is configured to decode service identification information from the Usage Report parameter group; the service identification information including the Rating Group parameter, the Service Identifier parameter, a number of uplink packets, a number of downlink packets, a total number of packets, uplink traffic, downlink traffic, total traffic and/or service duration; and a data verification and upload module, which is configured to compare the service identification information with an expected result, and determining a service rule detection result according to a comparison result; wherein, in the execution and control process of the service detection use case, traffic interception is configured to perform control to allow traffic for service rule detection to pass and stop other traffic except the traffic for service rule detection.

In a fifth aspect, an embodiment of the present disclosure further provides an electronic device, including: a processor and a storage device configured to store a computer program capable of running on the processor; wherein, the processor is configured to, when executing the computer program, perform any one of the above methods.

In a sixth aspect, an embodiment of the present disclosure further provides a storage medium storing a computer program which, when executed by a processor, implements any one of the above methods.

### BRIEF DESCRIPTION OF DRAWINGS

FIG. 1 is a flowchart illustrating a first service rule detection method according to an embodiment of the present disclosure;
FIG. 2 is a flowchart illustrating a second service rule detection method according to an embodiment of the present disclosure;
FIG. 3 is a schematic diagram of an architecture of 5G communication network according to an exemplary embodiment of the present disclosure;
FIG. 4 is a schematic structural diagram of a service rule detection system according to an exemplary embodiment of the present disclosure;
FIG. 5 is a flowchart illustrating a service rule detection process according to an exemplary embodiment of the present disclosure;
FIG. 6 is a schematic structural diagram of a first service rule detection device according to an embodiment of the present disclosure;
FIG. 7 is a schematic structural diagram of a second service rule detection device according to the embodiment of the present disclosure; and
FIG. 8 is a schematic diagram of an internal structure of a computer device according to an embodiment of the present disclosure.

### DETAIL DESCRIPTION OF EMBODIMENTS

5G mobile networks are widely applied to consumer networks, industrial internet, and the Internet of Things, new services emerge endlessly, and the operators provide a wide range of complex packages. Different charging rules are set for the different packages, and once a charging error occurs in a 5G communication network of the operators, problems such as disputes over telephone bills can be easily caused. Different traffic control strategies are adopted for the different packages, and serious accidents can be easily caused if the traffic strategies are wrong. The package system is established on the basis of correct service identification, and quick and accurate service identification detection is an important guarantee of quick launch of new service packages by the operators, and is also one of important technologies for the operators to realize autonomous networks.

In a 5G communication network, protocol feature rules for a network layer, a transport layer, and an application layer of services are configured on a User Plane Function (UPF) network element in a 5G core network, and service identification is performed on a message generated by a terminal according to the feature rules when the message passes the UPF network element. A common service identification rule on the UPF network element is formed by key information such as destination addresses and masks of the network layer, protocol types and port numbers of the transport layer, and domain names of the application layer. The UPF network element sends a service identification result to a Session Management Function (SMF) network element through a Usage Report parameter group in an N4 interface, the SMF network element sends the service identification result including Rating Group (RG) and Service Identifier (SI) to a Charging Function (CHF) network element via an N40 interface, and the CHF network element generates a Call Detail Record (CDR) according to the service identification result, with the CDR including traffic information in the service identification result, the RG and the SI, session information, user information, and other charging information.

There are two existing service identification detection methods, i.e., a manual detection method and an automatic detection method. The manual detection method is to manually operate a terminal to trigger a service and manually check the service identification result including the RG and the SI in the signaling of the N40 interface or the CDR. The automatic detection method is to generate an automatic use case according to a service rule and an expected result, automatically trigger a service on a terminal, and connect the terminal to a network element to automatically acquire the signaling or the CDR for RG and SI comparison. However, the existing automatic detection method has the following technical problems.
(1) Long time is consumed by a mode in which a detection system controls terminals to be on line and off line. In order to output correct identification results for different services and reduce interference of the identification results for the different services, an online-offline mode is adopted to ensure atomicity and isolation of the different services. In order to ensure stability of online and offline states, it generally takes 10s to ensure that an online state or an offline state of a terminal becomes stable. A scale of the SMF network element triggering an intermediate charging message Nchf_Converged Charging_Update Request to carry a Multiple Unit Usage parameter to the CHF network element for full-scale rule service detection is about 50,000, that is, the terminals are controlled to be on line or off line for about 50,000 times, which proposes an extremely high requirement on online-offline stability of the terminals.
(2) A large delay exists when the detection system acquires a signaling tracking file or a CDR file. After a terminal accesses a service, it takes a long time, which is about 4s, for a network element to generate a signaling tracking file and for the detection system to download the file.
(3) High network dependency exists. In order to automatically acquire files, the automatic detection system needs to be communicated with a network element through a network, but the existing commercial networks cannot be directly communicate with the network due to limitations such as a 4A (Authentication, Authorization, Accounting and Audit) server, resulting a failure of the existing automatic detection method.
(4) Risk of data leakage exists. In addition to the RG and the SI, the signaling tracking file and the CDR file further contain operator-sensitive information such as network element information. There is risk of information leakage in transferring the signaling tracking file or the CDR file to the detection system.

In order to solve the above technical problems, the embodiments of the present disclosure provide a service rule detection method and device, an electronic device, and a storage medium. The present disclosure will be further described in detail below with reference to the drawings and the embodiments.

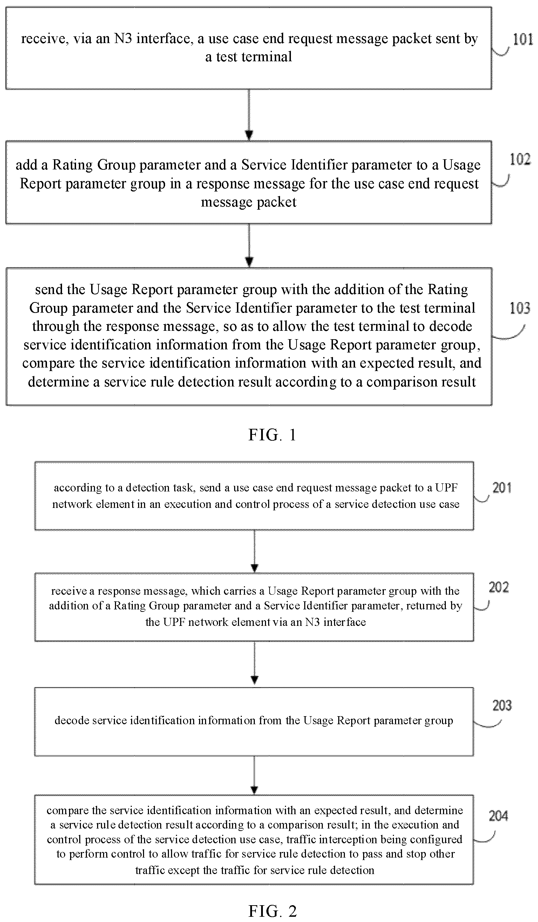

An embodiment of the present disclosure provides a service rule detection method, which is applied to a UPF network element. As shown in FIG. 1, the method includes operations 101 to 103.

Operation 101: receiving, via an N3 interface, a use case end request message packet sent by a test terminal. Operation 102: adding a Rating Group parameter and a Service Identifier parameter to a Usage Report parameter group in a response message for the use case end request message packet. Operation 103: sending the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result, with the service identification information including the Rating Group parameter, the Service Identifier parameter, a number of uplink packets, a number of downlink packets, a total number of packets, uplink traffic, downlink traffic, total traffic, and service duration.

The present embodiment may be applied to a 5G core network. According to the present embodiment, after receiving the use case end request message packet sent by the test terminal, the UPF network element adds the Rating Group parameter and the Service Identifier parameter to the signaling Usage Report parameter group in the TS29244 protocol of an N4 interface in 3GPP while converting the Usage Report parameter group into a media plane packet of the N3 interface and sending the same to the test terminal, and finally the returned Rating Group parameter, Service Identifier parameter, traffic, and other values are compared with the expected result on the test terminal, thereby completing service rule identification and detection.

In an exemplary embodiment, according to the protocols, the Usage Report parameter group with the addition of the Rating Group parameter and the Service Identifier parameter may be as shown in the following Table One.

**Table One**

| | | | | | | | |
|---|---|---|---|---|---|---|---|
| Octet 1 and 2 | | Usage Report IE Type=79 (decimal) | | | | | |
| Octets 3 and 4 | | Length=n | | | | | |

| Information elements | P | Condition/Comment | Appl. | | | | IE Type |
|---|---|---|---|---|---|---|---|
| | | | Sx a | Sx b | Sx c | N4 | |
| URR ID | M | This IE shall identify the URR for which usage is reported. | X | X | X | X | URR ID |
| UR-SEQN | M | This IE shall uniquely identify the Usage Report for the URR (see clause 5.2.2.3). | X | X | X | X | UR-SEQN |
| Usage Report Triger | M | This IE shall identify the trigger for this report. | X | X | X | X | Usage Report Trigger |
| Start Time | C | This IE shall be present, except if the Usage Report Trigger indicates 'Start of Traffic', 'Stop of Traffic' or 'MAC Addresses Reporting'. | X | X | X | X | Start Time |
| | | When present, this IE shall provide the timestamp when the collection of the information in this report was started. | | | | | |
| End Time | C | This IE shall be present, except if the Usage Report Trigger indicates 'Start of Traffic', 'Stop of Traffic or 'MAC Addresses Reporting'. | X | X | X | X | End Time |
| | | When present, this IE shall provide the timestamp when the collection of the information in this report was generated. | | | | | |
| Volume Measurement | C | This IE shall be present if a volume needs to be reported. | X | X | X | X | Volume Measurement |
| Duration Measurement | C | This IE shall be present if a duration measurement needs to be reported. | X | X | X | X | Duration Measurement |
| Time of First Packet | C | This IE shall be present if available for this URR. | - | X | X | X | Time of First Packet |
| Time of Last Packet | C | This IE shall be present if available for this URR. | - | X | X | X | Time of Last Packet |
| Usage Information | C | This IE shall be present if the UP function reports Usage Reports before and after a Monitoring Time, or before and after QoS enforcement. | X | X | X | X | Usage Information |
| | | When present, it shall indicate whether the usage is reported for the period before or after that time, or before or after QoS enforcement. | | | | | |
| Ethernet Traffic Information | C | This IE shall be present if Ethernet Traffic Information needs to be reported. See Table 7.5.8.3-3. | - | - | - | X | Ethernet Traffic Information |
| Rating Group | C | This IE shall be present if available for this URR. | - | - | - | X | Rating Group |
| Service Identifier | C | This IE shall be present if available for this URR. | - | - | - | X | Service Identifier |

In the present embodiment, in addition to the newly added Rating Group parameter and Service Identifier parameter, the Usage Report parameter group further includes the number of uplink packets, the number of downlink packets, the total number of packets, the uplink traffic, the downlink traffic, the total traffic, and the service duration. After the UPF network element sends the Usage Report parameter group to the test terminal, the test terminal may analyze the above data in the Usage Report parameter group for service rule detection.

In an exemplary embodiment, before receiving, via the N3 interface, the use case end request message packet sent by the test terminal, the method further includes: receiving, via the N3 interface, a use case start request message packet sent by the test terminal; sending a Packet Forwarding Control Protocol (PFCP) Session Report Request message, which carries a Usage Report parameter group with the addition of the Rating Group parameter and the Service Identifier parameter, to an SMF network element; initializing a Usage Report data area corresponding to an International Mobile Subscriber Identity (IMSI) of the test terminal; determining whether to perform fraud prevention detection on a service initiated by the test terminal according to a fraud identification in the use case start request message packet; and sending a response message corresponding to the use case start request message packet to the test terminal.

In the present embodiment, when the UPF network element receives the use case start request message packet, the UPF network element may first send the Usage Report parameter group of a current session to the SMF network element, and empty the Usage Report data area; and then the UPF network element may determine whether to perform fraud prevention detection on the service initiated by a test user according to the fraud identification in the use case start request message packet. Here, a UPF process control code in the use case start request message packet may be used as the fraud identification. If the UPF process control code in the use case start request message packet is set to be 1, a fraud prevention process is not performed on the service initiated by the terminal. If the UPF process control code in the use case start request message packet is set to be 0, the fraud prevention process needs to be performed on the service initiated by the terminal (the fraud prevention process here may adopt fraud techniques such as DNS Sniffer and fake headers). After the above operation is completed, the UPF network element may return the response message to the terminal after completing the processing for the test user.

In an exemplary embodiment, before receiving, via the N3 interface, the use case start request message packet sent by the test terminal, the method further includes: receiving, via the N3 interface, a task start request message packet sent by the test terminal; setting a downlink stream creation restriction for the IMSI of the test terminal; sending a PFCP Session Report Request message, which carries a Usage Report parameter group with the addition to the Rating Group parameter and the Service Identifier parameter, to the SMF network element; initializing the Usage Report data area corresponding to the IMSI of the test terminal; and sending a response message corresponding to the task start request message packet to the test terminal.

Here, when the UPF network element receives the task start request message packet, the UPF network element eliminates message interference actively initiated from the Internet to the test terminal by setting the downlink stream creation restriction on the test terminal. Meanwhile, the UPF network element may further send the Usage Report parameter group of a current session to the SMF network element, empty the Usage Report data area, and send the task start response message to the test terminal, thereby complete a response to the task start request message packet from the test terminal.

In an exemplary embodiment, before the UPF network element sets the downlink stream creation restriction for the IMSI of the test terminal, the UPF network element may first analyze the task start request message packet, and determine whether the test terminal has started a rule detection function. If the test terminal has started the rule detection function, an operation of setting the downlink stream creation restriction for the IMSI of the test terminal is executed.

In practical applications, a special identification may be obtained by analyzing the task start request message packet, and whether the test terminal has started the rule detection function may be determined according to a value of the special identification.

In an exemplary embodiment, before receiving, via the N3 interface, the task start request message packet sent by the test terminal, the method further includes: configuring the IMSI and IPv4 and IPv6 addresses for the test terminal; and interacting with the test terminal through the IMSI and the IPv4 and IPv6 addresses.

In the present embodiment, before the UPF network element receives the task start request message packet sent by the test terminal, the UPF network element provides the IMSI of the test terminal and the IPv4 and IPv6 address configurations for processing customized requests and response messages for the test terminal.

In an exemplary embodiment, before sending the Usage Report parameter group with the addition of the Rating Group parameter and the Service Identifier parameter to the test terminal through the response message, the method further includes: sending a PFCP Session Report Request message, which carries the User Report parameter group with the addition of the Rating Group parameter and the Service Identifier parameter, to the SMF network element.

Here, after the test terminal initiates a service conforming to a rule, when the UPF network element receives the use case end request message packet sent by the terminal, on the one hand, the UPF network element may send the Usage Report parameter group of a current session to the SMF network element, and on the other hand, the UPF network element may encapsulate the values of the Usage Report parameter group in the response message, and return the response message to the test terminal, thereby completing a response to the use case end request message packet from the test terminal.

In an exemplary embodiment, after receiving, via the N3 interface, the use case end request message packet sent by the test terminal, the method further includes: receiving, via the N3 interface, a task end request message packet sent by the test terminal; and canceling the downlink stream creation restriction corresponding to the IMSI of the test terminal.

In the present embodiment, after the test terminal completes a task, the test terminal sends the task end request message packet to the UPF network element. After receiving the task end request message packet, the UPF network element may cancel the downlink stream creation restriction on the test terminal, and send a response message to the test terminal.

According to the service rule detection method and device, the electronic device, and the storage medium provided in the embodiments of the present disclosure, the UPF network element receives, via the N3 interface, the request message packet sent by the test terminal, adds the Rating Group parameter and the Service Identifier parameter to the Usage Report parameter group in the response message for the request message packet, and sends the Usage Report parameter group with the addition of the Rating Group parameter and the Service Identifier parameter to the test terminal through the response message, so that the test terminal decodes the service identification information from the Usage Report parameter group, compare the service identification information with the expected result, and determine the service rule detection result according to the comparison result, with the service identification information including the Rating Group parameter, the Service Identifier parameter, the number of uplink packets, the number of downlink packets, the total number of packets, the uplink traffic, the downlink traffic, the total traffic, and the service duration.

An embodiment of the present disclosure provides another service rule detection method, which is applied to a test terminal. As shown in FIG. 2, the method includes operations 201 to 204.

Operation 201: sending, according to a detection task, a use case end request message packet to a UPF network element in an execution and control process of a service detection use case; operation 202: receiving a response message, which carries a Usage Report parameter group with the addition of a Rating Group parameter and a Service Identifier parameter, returned by the UPF network element via an N3 interface; operation 203: decoding service identification information from the Usage Report parameter group, with the service identification information including the Rating Group parameter, the Service Identifier parameter, a number of uplink packets, a number of downlink packets, a total number of packets, uplink traffic, downlink traffic, total traffic and/or service duration; and operation 204: comparing the service identification information with an expected result, and determining a service rule detection result according to a comparison result. In the execution and control process of the service detection use case, traffic interception is configured to perform control to allow traffic for service rule detection to pass and stop other traffic except the traffic for service rule detection.

According to the present embodiment, the use case end request message packet is sent to the UPF network element, the response message returned by the UPF network element is received and processed, the RG parameter, the SI parameter, the uplink and downlink traffic values and the like in the Usage Report parameter group in the response message are correctly decoded, and the RG parameter and the SI parameter obtained by the decoding are compared with expected values while checking the uplink and downlink traffic values, thereby completing service rule identification and detection.

In the present embodiment, the test terminal may receive and acquire an automatic use case converted according to a service rule and automatically execute the automatic use case; and the test terminal may acquire the detection task, and send the request message packet to the UPF network element in the execution and control process of the service detection use case according to the detection task. Here, the request message packet includes a task start request message packet, a use case start request message packet, a use case end request message packet, and a task end request message packet.

In addition, in the present embodiment, when the task on the terminal is started, the terminal may be configured to perform traffic interception to merely allow service rule messages to pass, so as to avoid interference from other services. When the task on the terminal is finished, the terminal may cancel the traffic interception to allow traffic for the other services to normally pass.

In an exemplary embodiment, comparing the service identification information with the expected result and determining the service rule detection result according to the comparison result includes: comparing the service identification information with the expected result for the first time; in a case where the comparison result of the first comparison indicates a success, determining the service rule detection result as a success; in a case where the comparison result of the first comparison indicates a failure, automatically performing the comparison of the service identification information with the expected result for a plurality of times until all obtained comparison results include two same comparison results; and taking the two same comparison results as the service rule detection result.

That is, when the comparison result of the first comparison indicates a failure, the use case is automatically executed for the second time; and if the comparison result obtained after the use case is executed for the second time still indicates a failure, the detection result of the service rule is determined as a failure. If the comparison result obtained after the use case is executed for the second time indicates a success, the third detection is performed; and if the detection result of the third detection indicates a success, the detection result of the use case is marked as a strategy success; and if the comparison result of the third detection indicates a failure, the detection result of the use case is marked as a failure

In the present embodiment, the test terminal may sequentially send the task start request message packet, the use case start request message packet, the use case end request message packet, and the task end request message packet to the UPF network element, sequentially receive the response messages returned by the UPF network element, and acquire the service identification information from the response message for the use case end request message packet for service rule detection.

In addition, it may be the case that no response message can be received from the UPF network element in the detection process. That is, in an exemplary embodiment, the method further includes: in a case where the request message packet is the task start request message packet, performing initialization again and executing the task if no response message is received from the UPF network element.

In a case where the request message packet is the use case start request message packet, the use case is initialized and executed again if no response message is received from the UPF network element. In a case where the request message packet is the use case end request message packet, the use case is initialized and executed again if no response message is received from the UPF network element. In a case where the request message packet is the task end request message packet, a timeout timer is started if no response message is received from the UPF network element, and the task end request message packet is sent again after the timeout timer expires.

In the present embodiment, the request message packet includes the task start request message packet, the use case start request message packet, the use case end request message packet, or the task end request message packet. When any one of the request message packets is sent, a corresponding operation is executed if no response message is received from the UPF network element, so as to continue the detection process.

In addition, in one embodiment, in a case where the request message packet is the use case start request message packet, a fraud identification in the use case start request message packet is correspondingly set according to whether the service rule includes a case of * fuzzy matching.

In an exemplary embodiment, a process control code in the use case start request message packet may be used as the fraud identification. For example, it may be set as follows in practical applications: in a case where the service rule includes the case of * fuzzy matching, the UPF process control code in the use case start request message packet sent by the test terminal to the UPF network element is set to be 1; and in a case where the service rule does not include the case of * fuzzy matching, the UPF process control code in the use case start request message packet sent by the test terminal to the UPF network element is set to be 0.

By setting the different values for the UPF process control code in the use case start request message packet, the UPF network element may perform analysis after receiving the use case start request message packet, and determine whether to perform fraud prevention detection according to the different values of the UPF process control code in the use case start request message packet.

According to the service rule detection method provided in the embodiments of the present disclosure, the use case end request message packet is sent to the UPF network element in the execution and control process of the service detection use case according to the detection task; the response message, which carries the Usage Report parameter group with the addition of the Rating Group parameter and the Service Identifier parameter, returned by the UPF network element via the N3 interface is received; the service identification information is decoded from the Usage Report parameter group, with the service identification information including the Rating Group parameter, the Service Identifier parameter, the number of uplink packets, the number of downlink packets, the total number of packets, the uplink traffic, the downlink traffic, the total traffic and/or the service duration; and the service identification information is compared with an expected result, and the service rule detection result is determined according to the comparison result. In the execution and control process of the service detection use case, traffic interception is configured to perform control to allow the traffic for service rule detection to pass and stop the other traffic except the traffic for service rule detection.

The methods provided in the embodiments of the present disclosure are respectively described above from the points of view of the UPF network element and the test terminal. Based on the above description, an interaction process between the UPF network element and the test terminal in the system will be described in detail below from a system level.

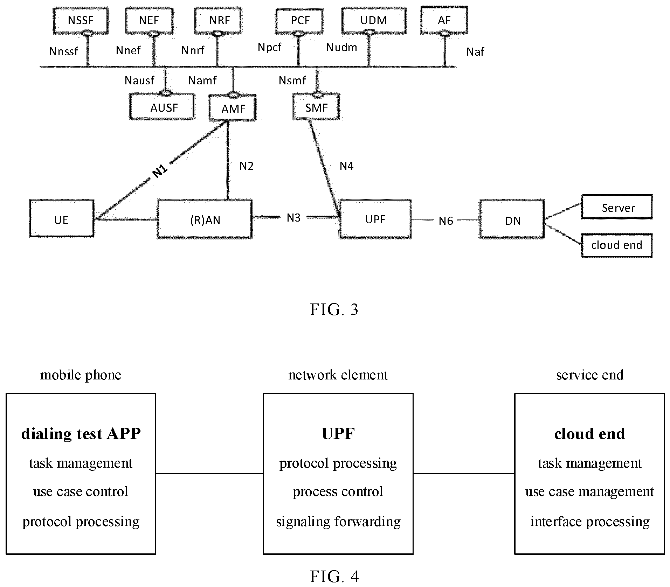

An embodiment of the present disclosure provides an automatic service identification detection system, which may be applied to an environment shown in FIG. 3. In the present embodiment, main network elements in a communication network system include an SMF network element, a Policy Control Function (PCF) network element, a CHF network element, a UPF network element, an Access and Mobility Management Function (AMF) network element, a Server, and a cloud end. The Server is a service rule management server, and can input and export service rules. The cloud end is defined as a service end which interacts with a dialing test APP on a User Equipment (UE) or terminal, converts the service rules into automatic use cases, and creates tasks based on the use cases. As shown in FIG. 4, a process provided in the present embodiment is implemented on the dialing test APP deployed on the UE on the one hand, and is implemented on the UPF network element on the other hand. After the dialing testing APP on the UE synchronizes the tasks with the cloud end and downloads the use cases from the cloud end, the dialing testing APP interacts with the UPF network element through newly added task start request message packets, task end request message packets, use case start request message packets, and use case end request message packets to realize quick detection of the service rules.

In an exemplary embodiment, referring to FIG. 4, the present embodiment involves the following modules: the dialing test APP on the terminal, the UPF network element of a 5G core network, and the cloud end used as the detection service end. Subsystems at the cloud end support generation of the automatic use cases according to the service rules, select the use cases to create test tasks, and provide an API interface for data interaction with the dialing test APP. The dialing test APP on the terminal supports synchronization of the tasks on the APP with the cloud end, executes the automatic use cases of the service rules which are contained in the tasks, and supports processing of customized messages for customized task and use case control in cooperation with the UPF network element. The UPF network element supports decoding and encapsulation of the GTP protocol and protocols of the customized messages, performs process control according to the request message packets sent by the terminal, and forwards, via the N3 interface, the Usage Report parameter group to the dialing test APP on the terminal.

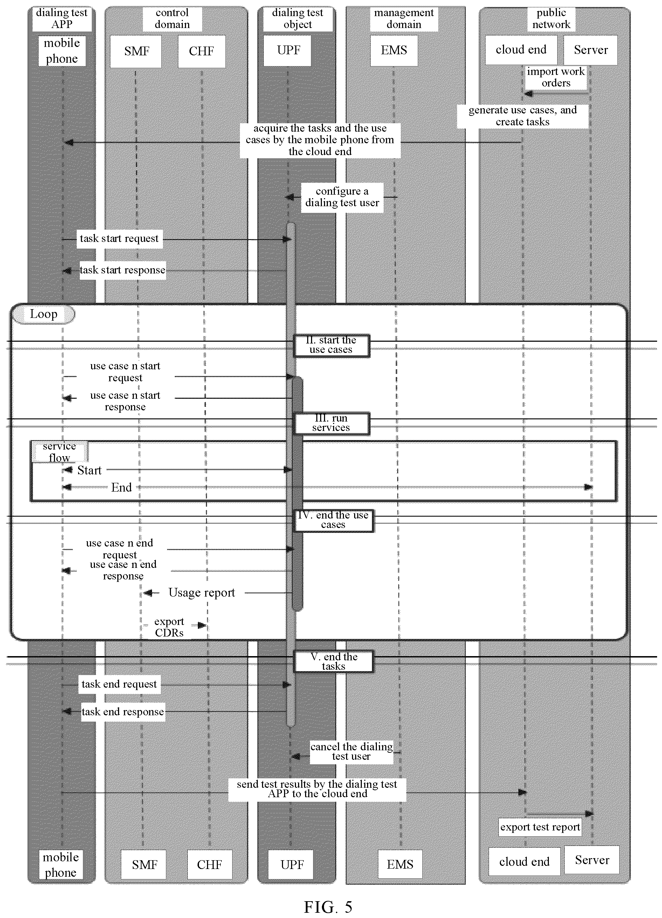

In an exemplary embodiment, referring to FIG. 5, the process provided in the present embodiment includes the following operations.

At operation 1, service rules are designed on the service rule management server, with the service rules including service names, and rules for a network layer, a transport layer, and an application layer. The service rule management server exports the service rules in the form of work orders in Excel format, so as to realize cross-system transfer. After the work orders of the service rules are imported at the cloud end, automatic use cases are generated according to the attributes of the service rules. A user flexibly selects the use cases to create tasks at the cloud end according to service deployment of the test object, i.e., the UPF network element. The existing 5G networks bear massive data services, so that the service rules of domestic and overseas operators are in a scale of more than ten thousand.

At operation 2, the dialing test APP is installed on the terminal, and the terminal acquires the tasks and the use cases from the cloud end. The terminal and the cloud end are both connected to a public network and communicate via the API interfaces. The user logs in the APP on the terminal with a user name and a password which are the same as those used to log in the cloud end. After logging in the dialing test APP, the terminal may synchronize the tasks and the use cases with the cloud end and download the tasks and the use cases to the terminal.

At operation 3, the test number IMSI of the terminal is registered on the UPF network element of the 5G core network, and an Element Management System (EMS) network element of a management domain is used to configure a test number which starts the rule detection function, an IPv4 address, and an IPv6 address on the UPF network element.

At operation 4, the dialing test APP on the terminal begins to execute a task. The dialing test APP first performs traffic interception control on the terminal with a control rule that the traffic for the dialing test APP is allowed to pass and the traffic for the other APPs is stopped. The dialing test APP sends the task start request message packet, which is an extended Intent Control Message protocol (ICMP) request message in the present embodiment. The following parameter values are carried in a data portion of the ICMP request message. A header of the ICMP request message carries a special identification, such as XXX65535. In the ICMP request message, a type note is task request, and a data structure is json and contains a task ID and an operational code indicating task start. The message format is shown in the following Table Two.

**Table Two**

| | |
|---|---|
| special identification (8 bytes) | XXX65535 |
| T (2 bytes) | TASK(1) |
| L (2 bytes) | length of struct |
| V (elongated, json format) | {CHAR taskid[32]://Task ID |
| | BYTE 1://opcode 1: start} |

After receiving the task start request message packet sent by the dialing test APP, the UPF network element first recognizes the message with the special identification, and then determines whether the user (IMSI) has started the rule detection function on the UPF network element. If the rule detection function is started, which indicates that the user is the terminal user of the test number, the UPF network element prohibits, after receiving the task start request message packet, the user from creating downlink data streams, so as to avoid downlink traffic interference from the Internet. Meanwhile, the UPF network element triggers the sending of the PFCP Session Report Request message carrying the Usage Report parameter group to the SMF network element, the SMF network element triggers the sending of the intermediate charging message Nchf_Converged Charging_Update Request carrying the Multiple Unit Usage parameter to the CHF network element, and a client may check historical CDR records in a charging center. Finally, all stream information about the user on the UPF network element is deleted and a response message is returned. A returned structure is shown in the following Table Three.

**Table Three**

| | |
|---|---|
| special identification (8 bytes) | XXX65535 |
| T (2 bytes) | TASK(1) |
| L (2 bytes) | length of struct |
| V (elongated, json format) | {CHAR taskid[32]://Task ID |
| | BYTE 1://opcode 1: start |
| | BYTE 0://operation result, 0: succ; 1: fail} |

If the returned operation result is 0, which indicates a success, the terminal proceeds to the next operation. The request message packet is not forwarded via an N6 interface.

Exception handling: if the dialing test APP does not receive a response message from the UPF network element after sending the task start request message packet, the dialing test APP is initialized again and executes the task. If the service detection function of the IMSI is not started on the UPF network element, the task start request message packet is forwarded via the N6 interface, at this time, no response message is correctly returned, the task is immediately ended, and the task start request message packet is not sent again.

At operation 5, the test use cases of the service rules are executed cyclically, each use case is used for testing one service rule, an ICMP request message with a special identification is also sent at the beginning of the execution of the use case for marking the start of the use case, and a message format of an extension field is shown in the following Table Four. The UPF process control code is set according to the service rule: the control code is set to be 1 if the service rule contains a wildcard, and the control code is set to be 0 if the service rule does not contain the wildcard

**Table Four**

| | |
|---|---|
| special identification (8 bytes) | XXX65535 |
| T (2 bytes) | CASE(2) |
| L (2 bytes) | length of struct |
| V (elongated, json format) | {CHAR caseid[32]://Case ID |
| | BYTE 1://opcode 1: start |
| | BYTE 0://UPF process control code, 0: normal process; 1: no fraud process |

When the UPF network element receives a use case start request message packet, the UPF network element first sends the Usage Report parameter group of the current session to the SMF network element, and empties the Usage Report data area; and then the UPF network element determines whether to perform fraud prevention detection on the service initiated by the test user according to the fraud identification in the use case start request message packet. If the UPF process control code is 1, the UPF network element does not perform fraud prevention detection when receiving messages for the service initiated by the user. If the UPF process control code is 0, the UPF network element needs to perform fraud prevention detection when receiving the messages for the service initiated by the user. Finally, the UPF network element returns the response message to the terminal, and a structure of the response message is shown in the following Table Five.

**Table Five**

| | |
|---|---|
| special identification (8 bytes) | XXX65535 |
| T (2 bytes) | CASE(2) |
| L (2 bytes) | length of struct |
| V (elongated, json format) | {CHAR caseid[32]://Case ID |
| | BYTE 1://opcode 1: start |
| | BYTE 0://operation result, 0: succ; 1: fail} |

If the returned operation result is 0, which indicates a success, the terminal proceeds to the next operation. The request message packet is not forwarded via the N6 interface.

Exception handling: if no response message is received from the UPF network element after the use case start request message packet is sent, the use case is initialized and executed again. If the service detection function of the IMSI is not started on the UPF network element, the use case start request message packet is forwarded via the N6 interface, at this time, no response message is correctly returned, the task is immediately ended, and the use case is not executed again.

At operation 6, the dialing test APP on the terminal simulates service triggering according to the service rules (for the network layer, the transport layer, and the application layer), and a range of the services includes short messages, multimedia messages, voice messages, HTTP services, HTTPS services, and 5G messages. When the UPF network element receives a service triggered by the dialing test APP, the UPF network element skips fraud prevention detection if the UPF process control code carried in the use case start request message packet is 1, and performs fraud prevention detection if the UPF process control code carried in the use case start request message packet is 0.

At operation 7, after the dialing test APP completes the triggering of the service, the dialing test APP sends the use case end request message packet. After the dialing test APP complete the simulation of the service, the use case end request message packet is triggered, and an encapsulation format of the data portion of the ICMP request message is shown in the following Table Six. The request message packet is not forwarded via the N6 interface.

**Table Six**

| | |
|---|---|
| special identification (8 bytes) | XXX65535 |
| T (2 bytes) | CASE(2) |
| L (2 bytes) | length of struct |
| V (elongated, json format) | {CHAR caseid[32]://Case ID |
| | BYTE 2://opcode 2: stop} |

When the UPF network element receives the use case end request message packet, the UPF network element sends the Usage Report parameter group of the current session to the SMF network element on the one hand, and encapsulates the values of the Usage Report parameter group into the response message on the other hand. Finally, the UPF network element returns the response message to the terminal, and the returned structure is shown in the following Table Seven.

**Table Seven**

| | |
|---|---|
| special identification (8 bytes) | XXX65535 |
| T (2 bytes) | USAGEREPORT(3) |
| L (2 bytes) | length of struct |
| V (elongated) | json |

The data is in the json format and contains a series of information of the terminal accessing the service, and the key fields are as follows:

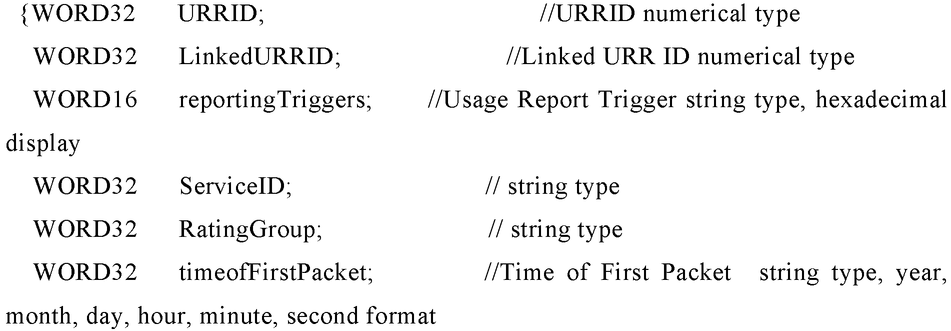

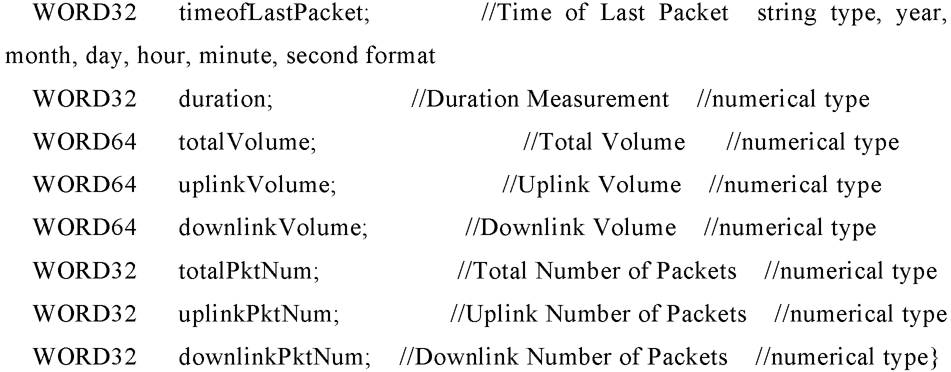

The dialing APP on the terminal receives the message returned by the UPF network element, analyzes the json data in the data portion of the ICMP response message, and performs comparison with the expected values in the use case. If the actually returned values are equal to the expected values, it is indicated that the test is successful. The compared service information includes the Rating Group parameter, the Service Identifier parameter, the number of uplink packets, the number of downlink packets, the total number of packets, the uplink traffic, the downlink traffic, the total traffic, and the service duration, and a measured rate on the APP and a measured rate on the UPF network element are subjected to extended comparison. The terminal records a test result of the use case in a database. The cycle is continued to test a next use case, and operations 5, 6, and 7 are executed until all the use cases are executed.

Exception handling: when the comparison result indicates a failure, the use case is automatically executed for the second time; and if the comparison result obtained after the use case is executed for the second time still indicates a failure, the detection result of the service rule is determined as a failure. If the comparison result obtained after the use case is executed for the second time indicates a success, the third detection is performed; and if the detection result of the third detection indicates a success, the detection result of the use case is marked as a strategy success; and if the comparison result of the third detection indicates a failure, the detection result of the use case is marked as a failure. The terminal is under wireless signals from a base station, and the wireless signals are not stable. When the first execution fails, the second execution and the third execution are automatically carried out, so that the success rate of the execution of the use cases can be greatly increased. Meanwhile, if no response message is received from the UPF network element after the use case end request message packet is sent, the use case is initialized and executed again. If the service detection function of the IMSI is not started on the UPF network element, the use case end request message packet is forwarded via the N6 interface, at this time, no response message is correctly returned, the task is immediately ended, and the use case is not executed again.

At operation 8, after all the service rules are tested, the dialing test APP on the terminal cancels traffic interception and sends the task end request message packet to the UPF network element, and a data format of the ICMP request message is shown in the following Table Eight. The request message packet is not forwarded via the N6 interface.

**Table Eight**

| | |
|---|---|
| special identification (8 bytes) | XXX65535 |
| T (2 bytes) | TASK(1) |
| L (2 bytes) | length of struct |
| V (elongated, json format) | {CHAR taskid[32]://Task GUID |
| | BYTE 2://opcode 1: stop} |

The UPF network element receives the task end request message packet and returns the response message with a returned structure shown in the following Table Nine. Meanwhile, the UPF network element cancels the downlink stream creation restriction on the test user.

**Table Nine**

| | |
|---|---|
| special identification (8 bytes) | XXX65535 |
| T (2 bytes) | TASK(1) |
| L (2 bytes) | length of struct |
| V (elongated, json format) | {CHAR taskid[32]://Task GUID |
| | BYTE 2://opcode 1: stop |
| | BYTE 0://operation result, 0: succ; 1: fail} |

If the returned operation result is 0, which indicates a success, the terminal completes the test task.

Exception handling: if no response message is received from the UPF network element after the task end request message packet is sent, the timeout timer is started, and the task end request message packet is sent again after the timeout timer expires. After the task end request message packet is sent again, if no response message is received from the UPF network element, the task is ended and is recovered after manual investigation. If the service detection function of the IMSI is not started on the UPF network element, the task end request message packet is forwarded via the N6 interface, at this time, no response message is correctly returned, the task is immediately ended, and the task end request message packet is not sent again.

At operation 9: after all the services are detected successfully, the detection result statistics may be browsed on the terminal, and test reports may be sent by the terminal to specified mailboxes. The dialing test APP on the terminal returns the detection results to the cloud end as task test results, which include the detection results of all the rule use cases of the tasks. The test reports may be automatically generated at the cloud end, and the user may check and export the test reports in the Excel format at the cloud end, so as to clearly check the detection result of each use case.

At operation 10, after the rule detection is completed, the UPF network element closes the service rule detection function of the test user, and deletes the IMSI and the IPv4 and IPv6 address configurations of the test user.

The methods provided in the embodiments of the present disclosure can greatly increase detection efficiency of the service rules. Through a test in which 50,000 service rules are verified at a certain local point, it takes 30 days to complete the test with the existing automatic detection method, while it takes 3 hours to complete the test with the methods provided in the present disclosure, so that the efficiency is greatly increased. In addition, according to the technical solutions provided in the present disclosure, the test terminal directly interacts with the UPF network element via the N3 interface to obtain the service identification information of a signaling plane, and can complete service detection without being additionally connected to a CDR system or a signaling tracking system, so that service detection efficiency can be greatly increased, the network dependency can be reduced, and the risk of leakage of key infrastructure information of the operators can be reduced. Finally, the methods provided in the embodiments of the present disclosure can greatly promote the operators to launch new service packages, and provide a service detection method which is high in efficiency and low in cost and suitable for large-scale popularization for intellectualization of the mobile networks.

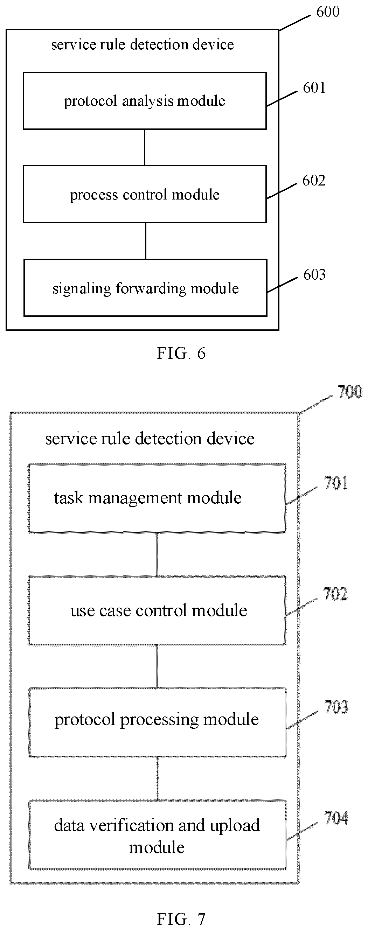

In order to implement the method provided in the embodiments of the present disclosure, an embodiment of the present disclosure further provides a service rule detection device. As shown in FIG. 6, a service rule detection device 600 includes: a protocol analysis module 601, a process control module 602, and a signaling forwarding module 603. The protocol analysis module 601 is configured to receive, via an N3 interface, a use case end request message packet sent by a test terminal; the process control module 602 is configured to add a Rating Group parameter and a Service Identifier parameter to a Usage Report parameter group in a response message for the use case end request message packet; and the signaling forwarding module 603 is configured to send the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result, with the service identification information including the Rating Group parameter, the Service Identifier parameter, the number of uplink packets, the number of downlink packets, a total number of packets, uplink traffic, downlink traffic, total traffic, and service duration.

In practical applications, the protocol analysis module 601, the process control module 602, and the signaling forwarding module 603 may be implemented by a processor in the service rule detection device.

In order to implement the method provided in the embodiments of the present disclosure, an embodiment of the present disclosure further provides another service rule detection device. As shown in FIG. 7, a service rule detection device 700 includes: a task management module 701, a use case control module 702, a protocol processing module 703, and a data verification and upload module 704. The task management module 701 is configured to send, according to a detection task, a use case end request message packet to a UPF network element in an execution and control process of a service detection use case; the use case control module 702 is configured to receive a response message, which carries a Usage Report parameter group with the addition of a Rating Group parameter and a Service Identifier parameter, returned by the UPF network element via an N3 interface; the protocol processing module 703 is configured to decode service identification information from the Usage Report parameter group, with the service identification information including the Rating Group parameter, the Service Identifier parameter, the number of uplink packets, the number of downlink packets, a total number of packets, uplink traffic, downlink traffic, total traffic and/or service duration; and the data verification and upload module 704 is configured to compare the service identification information with an expected result, and determining a service rule detection result according to a comparison result. In the execution and control process of the service detection use case, traffic interception is configured to perform control to allow traffic for service rule detection to pass and stop other traffic except the traffic for service rule detection.

In practical applications, the task management module 701, the use case control module 702, the protocol processing module 703, and the data verification and upload module 704 may be implemented by a processor in the service rule detection device. It should be noted that the division of the program modules in the operation of the device as described in the above embodiment is merely an example for illustration, and the above processing procedures may be allocated to different program modules as required in practical applications, that is, an internal structure of a terminal is divided into different program modules, so as to complete all or part of the processing procedures described above. In addition, the device provided in the above embodiment and the aforesaid method embodiments belong to the same concept, and a specific implementation process of the device provided in the above embodiment may be found in the method embodiments, and thus will not be described in detail here.

In order to implement the methods provided in the embodiments of the present disclosure, an embodiment of the present disclosure further provides a computer program product, which includes computer instructions stored in a computer-readable storage medium. A processor of a computer device reads the computer instructions from the computer-readable storage medium, and executes the computer instructions to cause the computer device to perform the operations of the aforesaid methods.

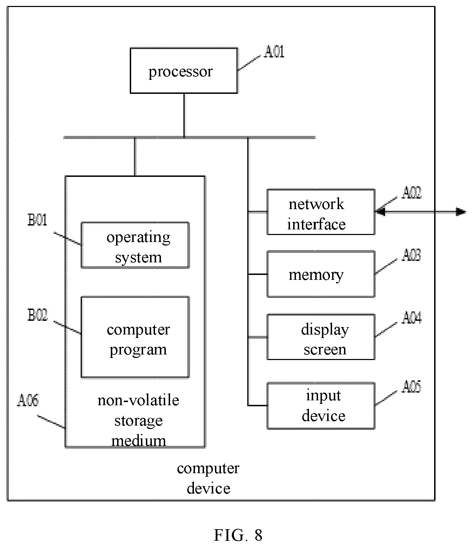

In order to implement the methods provided in the embodiments of the present disclosure, an embodiment of the present disclosure further provides an electronic device (computer device) based on a hardware implementation of the above program modules. In an exemplary embodiment, the computer device may be a terminal, and has an internal structure as shown in FIG. 8. The computer device includes a processor A01, a network interface A02, a display screen A04, an input device A05, and a storage device (not shown), which are connected through a system bus. The processor A01 of the computer device is configured to provide computing and control capabilities. The storage device of the computer device includes a memory A03 and a non-volatile storage medium A06. The non-volatile storage medium A06 stores an operating system B01 and a computer program B02. The memory A03 provides an operating environment for the operating system B01 and the computer program B02 in the non-volatile storage medium A06. The network interface A02 of the computer device is configured to be connected to and communicate with an external terminal through a network. The computer program is executed by the processor A01 to implement the method of any one of the above embodiments. The display screen A04 of the computer device may be a liquid crystal display screen or an electronic ink display screen, and the input device A05 of the computer device may be a touch layer covered on the display screen, or a key, trackball or touch pad disposed on a casing of the computer device, or an external keyboard, touch pad or mouse.

It should be understood by those of ordinary skill in the art that the schematic structural diagram in FIG. 8 merely illustrates part of the structures related to the technical solutions provided in the present disclosure, and does not constitute any limitation to the computer device to which the technical solutions provided in the present disclosure are applied. The computer device may include more or fewer components than those shown in FIG. 8, or may have some components combined, or may have the components arranged in a different way.

An embodiment of the present disclosure provides a device, which includes a processor, a storage device, and a program which is stored in the storage device and is capable of running on the processor. When the processor executes the program, the method of any one of the above embodiments is implemented.

It should be understood by those of ordinary skill in the art that the embodiments of the present disclosure may be implemented as a method, a system, or a computer program product. Accordingly, the present disclosure may take the form of embodiments involving hardware alone, embodiments involving software alone, or embodiments combining software and hardware. Furthermore, the present disclosure may take the form of a computer program product, which is implemented on one or more computer-usable storage media (including, but not limited to, magnetic disks, Compact Disc Read-Only Memories (CD-ROMs), and optical storage devices) containing computer-usable program codes.

The present disclosure are described with reference to the flowcharts and/or the block diagrams illustrating the method, the device (system), and the computer program product according to the embodiments of the present disclosure. It should be understood that each process of the flowcharts and/or each block of the block diagrams, and a combination of processes of the flowcharts and/or a combination of the blocks of the block diagrams may be implemented by computer program instructions. The computer program instructions may be provided for a general purpose computer, a special purpose computer, an embedded processor, or processors of other programmable data processing devices to produce a machine, such that the instructions executed by the computers or the processors of the other programmable data processing terminal devices can generate a device configured to perform a function or functions specified in one or more processes of the flowcharts and/or one or more blocks of the block diagrams.

The computer program instructions may also be stored in a computer-readable memory capable of guiding the computers or the other programmable data processing devices to operate in a particular manner, such that the instructions stored in the computer-readable memory can produce a product including an instruction device configured to perform a function or functions specified in one or more processes of the flowcharts and/or one or more blocks of the block diagrams.

The computer program instructions may also be loaded to the computers or the other programmable data processing devices, so as to cause the computers or the other programmable data processing devices to perform a series of steps to produce the processing realized by the computers, such that the instructions executed on the computers or the other programmable devices can provide steps for performing a function or functions specified in one or more processes of the flowcharts and/or one or more blocks of the block diagrams.

As a typical configuration, the computer device includes one or more processors (e.g., one or more Central Processing Units (CPUs)), an input/output interface, a network interface, and a memory.

The storage device may be in a form of a volatile memory, a Random Access Memory (RAM) and/or a non-volatile memory among the computer-readable media, such as a Read-Only Memory (ROM) or a flash memory (e.g., a flash RAM). The storage device is an example of the computer-readable media.

The computer-readable medium includes permanent/non-permanent media and removable/non-removable media, and can achieve information storage with any method or technique. The information may be computer-readable instructions, data structures, modules of a program, or other data. Examples of a storage medium of a computer include, but are not limited to, a Phase-change Memory (PRAM), a Static Random Access Memory (SRAM), a Dynamic Random Access Memory (DRAM), other types of RAMs, an ROM, an Electrically Erasable Programmable Read-Only Memory (EEPROM), a flash memory or other memory technology, a CD-ROM, a Digital Versatile Disk (DVD) or other optical memories, a magnetic cassette, a magnetic tape, a magnetic disk or other magnetic storage devices, or any other non-transmission medium, which can be used to store information that can be accessed by a computing device. As defined herein, the computer-readable medium does not include transitory media such as a modulated data signal and a carrier wave.

It should be understood that the storage device in the embodiments of the present disclosure may be a volatile memory or a nonvolatile memory, or may include both a volatile memory and a nonvolatile memory. The nonvolatile memory may be an ROM, a Programmable Read-Only Memory (PROM), an Erasable Programmable Read-Only Memory (EPROM), an EEPROM, a ferromagnetic random access memory (FRAM), a Flash Memory, a magnetic surface memory, an optical disc, or a CD-ROM; and the magnetic surface memory may be a disk memory or a tape memory. The volatile memory may be an RAM serving as an external cache. Illustratively but not restrictively, various forms of the RAMs may be adopted, such as an SRAM, a Synchronous Static Random Access Memory (SSRAM), a DRAM, a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The storage device described in the embodiments of the present disclosure is intended to include, but is not limited to, the above memories and any other suitable types of memories.

According to the service rule detection method and device, the electronic device, and the storage medium provided in the embodiments of the present disclosure, the UPF network element receives, via the N3 interface, the use case end request message packet sent by the test terminal, adds the Rating Group parameter and the Service Identifier parameter to the Usage Report parameter group in the response message for the use case end request message packet, and sends the Usage Report parameter group with the addition of the Rating Group parameter and the Service Identifier parameter to the test terminal through the response message, so that the test terminal decodes the service identification information from the Usage Report parameter group, compares the service identification information with the expected result, and determines the service rule detection result according to the comparison result, with the service identification information including the Rating Group parameter, the Service Identifier parameter, the number of uplink packets, the number of downlink packets, the total number of packets, the uplink traffic, the downlink traffic, the total traffic, and the service duration. According to the technical solutions provided in the present disclosure, the test terminal directly interacts with the UPF network element via the N3 interface to obtain the service identification information of the signaling plane, and can complete service detection without being additionally connected to the CDR system or the signaling tracking system, so that the service detection efficiency can be greatly increased, the network dependency can be reduced, and the risk of leakage of the key infrastructure information of the operators can be reduced.

It should be further noted that the terms "includes", "comprises" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including a..." does not exclude the existence of other identical elements in the process, method, article, or device which includes the element.

The description above is merely of the embodiments of the present disclosure, but is not intended to limit the present disclosure. Various modifications and changes may be made to the present disclosure by those of ordinary skill in the art. Any modification, equivalent replacement and improvement made within the spirit and principle of the present disclosure should be included in the scope of the appended claims of the present disclosure.

## Claims

1. A service rule detection method applied to a User Plane Function (UPF) network element, comprising:
receiving, via an N3 interface, a use case end request message packet sent by a test terminal;
adding a Rating Group parameter and a Service Identifier parameter to a Usage Report parameter group in a response message for the use case end request message packet; and
sending the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result; wherein the service identification information comprises the Rating Group parameter, the Service Identifier parameter, a number of uplink packets, a number of downlink packets, a total number of packets, uplink traffic, downlink traffic, total traffic, and service duration.

2. The method of claim 1, wherein, before receiving, via the N3 interface, the use case end request message packet sent by the test terminal, the method further comprises:
receiving, via the N3 interface, a use case start request message packet sent by the test terminal;
sending a Packet Forwarding Control Protocol (PFCP) Session Report Request message, which carries a Usage Report parameter group with an addition of the Rating Group parameter and the Service Identifier parameter, to a Session Management Function (SMF) network element;
initializing a Usage Report data area corresponding to an International Mobile Subscriber Identity (IMSI) of the test terminal;
determining whether to perform fraud prevention detection on a service initiated by the test terminal according to a fraud identification in the use case start request message packet; and
sending a response message corresponding to the use case start request message packet to the test terminal.

3. The method of claim 2, wherein, before receiving, via the N3 interface, the use case start request message packet sent by the test terminal, the method further comprises:
receiving, via the N3 interface, a task start request message packet sent by the test terminal;
setting a downlink stream creation restriction for the IMSI of the test terminal;
sending a PFCP Session Report Request message, which carries a Usage Report parameter group with an addition to the Rating Group parameter and the Service Identifier parameter, to the SMF network element;
initializing the Usage Report data area corresponding to the IMSI of the test terminal; and
sending a response message corresponding to the task start request message packet to the test terminal.

4. The method of claim 3, wherein, before receiving, via the N3 interface, the task start request message packet sent by the test terminal, the method further comprises:
configuring the IMSI and IPv4 and IPv6 addresses for the test terminal; and
interacting with the test terminal through the IMSI and the IPv4 and IPv6 addresses.

5. The method of claim 1, wherein, before sending the Usage Report parameter group with the addition of the Rating Group parameter and the Service Identifier parameter to the test terminal through the response message, the method further comprises:
sending a PFCP Session Report Request message, which carries the Usage Report parameter group with the addition of the Rating Group parameter and the Service Identifier parameter, to an SMF network element.

6. The method of claim 1, wherein, after receiving, via the N3 interface, the use case end request message packet sent by the test terminal, the method further comprises:
receiving, via the N3 interface, a task end request message packet sent by the test terminal; and
canceling a downlink stream creation restriction corresponding to an IMSI of the test terminal.

7. A service rule detection method applied to a test terminal, comprising:
sending, according to a detection task, a use case end request message packet to a UPF network element in an execution and control process of a service detection use case;
receiving a response message, which carries a Usage Report parameter group with an addition of a Rating Group parameter and a Service Identifier parameter, returned by the UPF network element via an N3 interface;
decoding service identification information from the Usage Report parameter group; the service identification information comprising the Rating Group parameter, the Service Identifier parameter, a number of uplink packets, a number of downlink packets, a total number of packets, uplink traffic, downlink traffic, total traffic and/or service duration; and
comparing the service identification information with an expected result, and determining a service rule detection result according to a comparison result; wherein, in the execution and control process of the service detection use case, traffic interception is configured to perform control to allow traffic for service rule detection to pass and stop other traffic except the traffic for service rule detection.

8. The method of claim 7, wherein comparing the service identification information with the expected result and determining the service rule detection result according to the comparison result comprises:
performing a first-time comparison of the service identification information with the expected result;
in a case where a comparison result of the first-time comparison indicates a success, determining the service rule detection result as a success; and
in a case where the comparison result of the first-time comparison indicates a failure, automatically performing a comparison of the service identification information with the expected result for a plurality of times until all obtained comparison results comprise two same comparison results; and taking the two same comparison results as the service rule detection result.

9. The method of claim 7, wherein, after sending, according to the detection task, the use case end request message packet to the UPF network element in the execution and control process of the service detection use case, the method further comprises:
in a case where no response message is received from the UPF network element, initializing the service detection use case and executing the service detection use case again.

10. The method of claim 7, wherein, before sending, according to the detection task, the use case end request message packet to the UPF network element in the execution and control process of the service detection use case, the method further comprises:
sending a use case start request message packet to the UPF network element, and in a case where no response message is received from the UPF network element, initializing the service detection use case and executing the service detection use case again.

11. The method of claim 10, wherein, before sending the use case start request message packet to the UPF network element, the method further comprises:
sending a task start request message packet to the UPF network element, and in a case where no response message is received from the UPF network element, initializing the detection task again and executing the detection task.

12. The method of claim 7, wherein, after sending the use case end request message packet to the UPF network element, the method further comprises:
sending a task end request message packet to the UPF network element, and in a case where no response message is received from the UPF network element, starting a timeout timer, and sending the task end request message packet again after the timeout timer expires.

13. The method of claim 10, wherein sending the use case start request message packet to the UPF network element comprises:
according to whether a service rule comprises a case of * fuzzy matching, correspondingly setting a fraud identification in the use case start request message packet.

14. A service rule detection device applied to an UPF network element, comprising:
a protocol analysis module, which is configured to receive, via an N3 interface, a use case end request message packet sent by a test terminal;
a process control module, which is configured to add a Rating Group parameter and a Service Identifier parameter to a Usage Report parameter group in a response message for the use case end request message packet; and
a signaling forwarding module, which is configured to send the Usage Report parameter group with the addition of the Rating Group parameter and the Service Identifier parameter to the test terminal through the response message, so as to allow the test terminal to decode service identification information from the Usage Report parameter group, compare the service identification information with an expected result, and determine a service rule detection result according to a comparison result; wherein the service identification information comprises the Rating Group parameter, the Service Identifier parameter, a number of uplink packets, a number of downlink packets, a total number of packets, uplink traffic, downlink traffic, total traffic, and service duration.

15. A service rule detection device applied to a test terminal, comprising:
a task management module, which is configured to send, according to a detection task, a use case end request message packet to a UPF network element in an execution and control process of a service detection use case;
a use case control module, which is configured to receive a response message, which carries a Usage Report parameter group with an addition of a Rating Group parameter and a Service Identifier parameter, returned by the UPF network element via an N3 interface;
a protocol processing module, which is configured to decode service identification information from the Usage Report parameter group; the service identification information comprising the Rating Group parameter, the Service Identifier parameter, a number of uplink packets, a number of downlink packets, a total number of packets, uplink traffic, downlink traffic, total traffic and/or service duration; and
a data verification and upload module, which is configured to compare the service identification information with an expected result, and determining a service rule detection result according to a comparison result; wherein, in the execution and control process of the service detection use case, traffic interception is configured to perform control to allow traffic for service rule detection to pass and stop other traffic except the traffic for service rule detection.

16. An electronic device, comprising: a processor and a storage device configured to store a computer program capable of running on the processor; wherein
the processor is configured to perform, when running the computer program, operations of the method of any one of claims 1 to 13.

17. A storage medium storing a computer program which, when executed by a processor, performs operations of the method of any one of claims 1 to 13.
